Europäisches Patentamt

**European Patent Office**

**Office européen des brevets**

(11) Veröffentlichungsnummer: **0 143 200**
A2

# (12) EUROPÄISCHE PATENTANMELDUNG

(21) Anmeldenummer: **84110272.6**

(22) Anmeldetag: **29.08.84**

(51) Int. Cl.⁴: **G 01 M 1/32**

(30) Priorität: **02.09.83 DE 8325281 U**
**17.07.84 DE 8421332 U**

(43) Veröffentlichungstag der Anmeldung: **05.06.85**
**Patentblatt 85/23**

(84) Benannte Vertragsstaaten: **AT BE CH DE FR GB IT LI LU NL SE**

(71) Anmelder: **Thissen, Werner P., Weseler Strasse 1, D-4180 Goch (DE)**
Anmelder: **Schillings, Karl H., Florianweg, D-4180 Goch 2 (DE)**

(72) Erfinder: **Thissen, Werner P., Weseler Strasse 1, D-4180 Goch (DE)**
Erfinder: **Schillings, Karl H., Florianweg, D-4180 Goch 2 (DE)**

(74) Vertreter: **Stark, Walter, Dr.-Ing., Moerser Strasse 140, D-4150 Krefeld (DE)**

(54) **Vorrichtung zum Befestigen von Ausgleichsgewichten.**

(57) Die Erfindung betrifft eine Vorrichtung zum Befestigen von Ausgleichsgewichten am Felgenhorn (2) von insbesondere Kraftfahrzeugrädern. Um eine Beschädigung des Felgenhorns durch Aufklemmen von Ausgleichsgewichten zu vermeiden, ist die Vorrichtung gekennzeichnet durch einen an der Felge (1) befestigbaren Ring (8, 26), der auf seiner der Felge (1) zugewandten Seite auf einem Teilkreis und in regelmäßigen Abständen angeordnete Aufnahmen (11, 29) für Ausgleichsgewichte aufweist.

# Dr.-Ing. WALTER STARK  ·0143200

## PATENTANWALT

Moerser Straße 140     D-4150 Krefeld 1     ☎ (02151) 28222 u. 20469     ⊠ 8 53 578

Werner P. Thissen, Weseler Str.1, 4180 Goch
Karl H. Schillings, Florianweg, 4180 Goch 2

Vorrichtung zum Befestigen von Ausgleichsgewichten

Die Erfindung betrifft eine Vorrichtung zum Befestigen von Ausgleichsgewichten am Felgenhorn von insbesondere Kraftfahrzeugrädern.

Herkömmliche Ausgleichsgewichte für Kraftfahrzeugräder besitzen eine Klemme, die über das Felgenhorn geschlagen wird. Dabei wird die Oberfläche des Felgenhornes mehr oder weniger stark beschädigt, insbesondere dann, wenn die Felge aus Leichtmetall besteht. Wenn das Kraftfahrzeugrad mehrfach ausgewuchtet wird, bleiben an den Befestigungsstellen für die Ausgleichsgewichte Beschädigungen, die nicht nur das Aussehen der Felge beeinträchtigen, sondern die auch Anlaß für Korrosionen sind.

Aufgabe der Erfindung ist es, eine Vorrichtung der eingangs beschriebenen Gattung anzugeben, die es erlaubt, ein Kraftfahrzeugrad mehrfach auszuwuchten, ohne daß die Felge bzw. das Felgenhorn beschädigt wird.

Diese Aufgabe wird gelöst mit einer Vorrichtung, die gekennzeichnet ist durch einen an der Felge

0143200

- 2 -

befestigbaren Ring, der auf seiner der Felge
zugewandten Seite auf einem Teilkreis und in
regelmäßigen Abständen angeordnete Aufnahmen
für Ausgleichsgewichte aufweist.

Insbesondere können die Aufnahmen als zur Felge
hin offene Ausnehmungen mit profiliertem Querschnitt
ausgebildet sein, in die angepaßte Ausgleichsgewichte
einsetzbar sind. Die Ausnehmungen können vorzugsweise
einen Kreisquerschnitt oder einen rechteckigen
bis quadratischen Querschnitt aufweisen. Das
schließt nicht aus, daß Ausnehmungen bzw. Ausgleichsgewichte mit anderen Querschnitten verwendet
werden. Auf jeden Fall ist das Einsetzen der
Ausgleichsgewichte in die zugeordneten Ausnehmungen
einfacher, und zwar auch dann, wenn die Ausgleichsgewichte toleranzbedingte Maßabweichungen aufweisen.

Eine andere Ausführung ist gekennzeichnet durch
einen unter ein rundes Felgenhorn oder über ein
flaches Felgenhorn klemmbaren Paßring, der auf
seiner dem Felgenhorn zugewandten Seite eine
Reihe von Stiften aufweist, auf die mit einem
zugeordneten Loch versehene Ausgleichsgewichte
aufsetzbar sind.

Nach dem Ausmessen der Unwucht des Kraftfahrzeugrades
wird eine entsprechende Anzahl von Ausgleichsgewichten, die zusammen die gewünschte Auswuchtmasse
besitzen, auf nebeneinander angeordnete Stifte
des Paßringes gesetzt. Der Paßring wird dann
unter ein rundes Felgenhorn oder über ein flaches
Felgenhorn geklemmt. Vorzugsweise sind die Stifte
in regelmäßigen Abständen angeordnet, so daß
praktisch jeder Umfangsabschnitt des Paßringes

0143200

- 3 -

mit Ausgleichsgewichten besetzt werden kann.
Im übrigen können die Ausgleichsgewichte im wesentlichen quaderförmig ausgebildet sein und jeweils
gleiche Masse besitzen. Eine Normmasse beträgt
vorzugsweise 5 g. Der Abstand der Stifte sollte
so eingerichtet sein, daß mehrere auf benachbarte
Stifte aufgesetzte Ausgleichsgewichte sich aneinander
abstützen können.

Einen vollständigen Schutz der Ausgleichsgewichte
gegen Sicht und Verschmutzung erhält man, wenn
der Paßring ein im Querschnitt U-förmiges Profil
aufweist und eine ringförmige Kammer zur Aufnahme
der Ausgleichsgewichtet bildet. Wenn der Paßring
für ein flaches Felgenhorn bestimmt ist, kann
der äußere U-Schenkel zu einer das Felgenhorn
überfassenden Klemmleiste ausgeformt sein.

Der Ring kann unter ein rundes Felgenhorn geklemmt
werden. Dabei wird die natürliche Elastizität
des Ringes ausgenutzt. Das kann im Einzelfall
und bei toleranzbedingten Maßabweichungen zu
Problemen bei der Montage führen. Diese Nachteile
werden dann behoben, wenn der Ring an seiner
radial äußeren Umfangsfläche eine umlaufende
Nut zur Aufnahme einer Ausgleichsfeder aufweist,
die insbesondere eine gewellte Schlangenfeder
ist. Über diese Ausgleichsfeder stützt sich der
Ring im runden Felgenhorn ab. Die Ausgleichsfeder
hat in radialer Richtung eine größere Nachgiebigkeit
als der Ring selbst, sie gleicht Toleranzen aus
und vereinfacht die Montage.

Bei einer anderen Ausführung kann der Ring Durchgangslöcher für Befestigungsschrauben oder Druckknöpfe oder Befestigungsklemmen aufweisen, mit
denen der Ring auf einem Teilkreis der Felge
befestigbar ist. Hier wird der Ring unmittelbar
auf einem geeigneten Teilkreis der Felge, zum
Beispiel im Felgenhump oder Felgenhorn befestigt.

Bei allen Ausführungen kann der Ring zusätzlich
eine Einrichtung zum Befestigen einer Radkappe
aufweisen, so daß Ring und Radkappe zwar getrennt
montierbar sind aber eine Einheit bilden.

Mit dieser Vorrichtung lassen sich Ausgleichsgewichte
beschädigungsfrei an Felgenhörnern befestigen,
weil die Elastizität des Paßringes ausgenutzt
wird. Der Paßring kann dazu insbesondere aus
einem Kunststoffmaterial bestehen. Günstige Eigenschaften weist Hart-PVC auf, weil es nicht nur
eine hinreichende Elastizität besitzt, sondern
auch eine genügende Festigkeit und Oberflächenresistenz. Außerdem lassen sich Kunststoffmaterialien
nach Bedarf einfärben und/oder mit Blenden versehen.

Die Vorrichtung eignet sich für statische und/oder
dynamische Auswuchtung innen und außen an Kraftfahrzeugrädern. Die Auswuchtgewichte können mehrfach
verwendet werden.

Im folgenden werden in der Zeichnung dargestellte
Ausführungsbeispiele der Erfindung erläutert;
es zeigen:

Fig. 1 in schematischer Darstellung einen Axialschnitt durch eine Felge,

- 5 -

Fig. 2 eine Ansicht des Paßringes in Richtung
des Pfeils II auf den Gegenstand nach Fig. 1,

Fig. 3 teilweise eine andere Ausführung des Gegenstandes nach Fig. 1.

Fig. 4 schematisch und teilweise einen Axialschnitt
durch eine weitere Ausführung,

Fig. 5 teilweise eine Ansicht in Richtung des
Pfeils V auf die Vorrichtung,

Fig. 6 teilweise eine andere Ausführung des Gegenstandes nach Fig. 4.

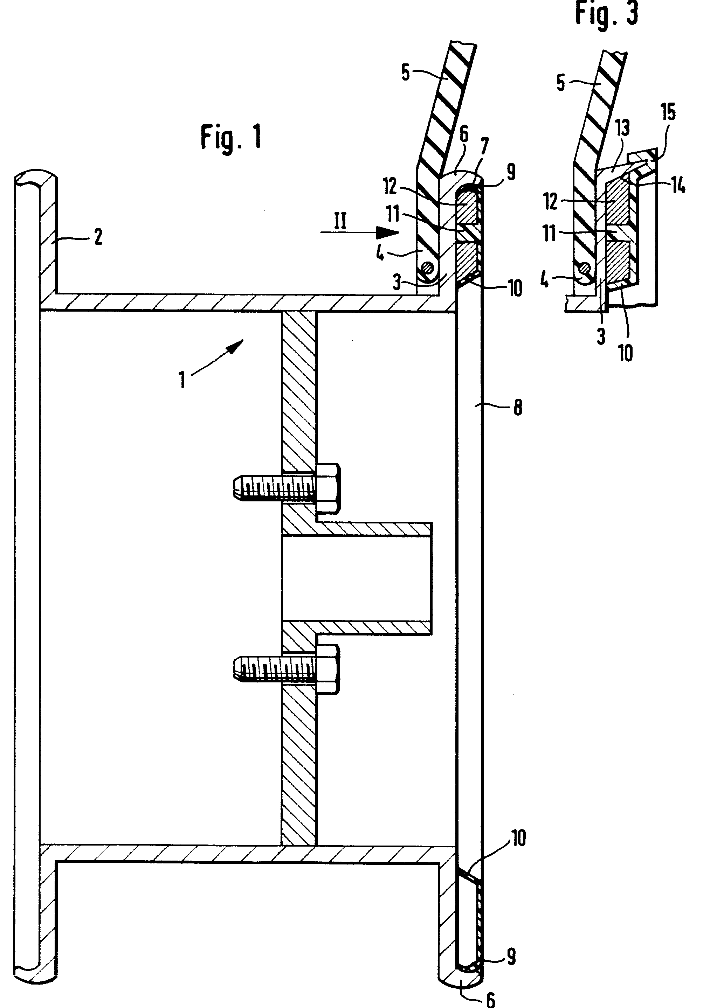

In Fig. 1 ist schematisch eine Felge 1 eines
Kraftfahrzeugrades dargestellt. Die Felge 1 weist
ein inneres Felgenhorn 2 und ein äußeres Felgenhorn
3 auf. Innenseitig an den Felgenhörnern 2 bzw.
3 stützen sich Wülste 4 des nur angedeuteten
Reifens 5 ab.

Die in Fig. 1 dargestellten Felgenhörner 2 bzw. 3
weisen an ihrem Außenumfang jeweils eine in axialer
Richtung gerichtete runde Schürze 6 auf, die
eine kreisförmige hinterschnittene Ausnehmung
7 bildet. In diese Ausnehmung 7 ist ein Paßring
8 eingesetzt, der aus Hart-PVC besteht. Der Paßring
8 besitzt einen im wesentlichen U-förmigen Querschnitt. Sein äußerer U-Schenkel 9 ist der Rundung
der Schürze 6 angepaßt und greift dementsprechend
in die von der Schürze 6 gebildete Hinterschneidung.
Der innere U-Schenkel 10 erstreckt sich etwas
schräg in Richtung zur Achse hin und liegt am
Felgenhorn 2 bzw. 3 an. Dementsprechend bildet der Paßring 8 zusammen mit dem zugeordneten Felgenhorn 2 bzw. 3 eine ringförmige Kammer.

Auf einem Teilkreis zwischen den beiden U-Schenkeln
9 und 10 ist eine Reihe von Stiften 11 an die
Innenseite des Paßringes 8 angeformt. Die Stifte
11 erstrecken sich ebenfalls bis zum Felgenhorn.
Sie sind in regelmäßigen Abständen angeordnet.

Auf die Stifte 11 können Ausgleichsgewichte 12
aufgesetzt werden, die eine im wesentlichen quaderförmige Gestalt sowie ein Loch zum Aufsetzen
auf den zugeordneten Stift 11 besitzen. Die Ausgleichsgewichte sind untereinander identisch,
sie besitzen eine Masse von z.B. 5 g. Der Abstand
der Stifte 11 ist so eingerichtet, daß Ausgleichsgewichte 12, die auf benachbarte Stifte 11 gesetzt
sind, sich aneinander abstützen können. Im übrigen
sind die Abmessungen der Ausgleichsgewichte 12
einerseits und die Abmessungen der vom Paßring
8 gebildeten Kammer so eingerichtet, daß die
Ausgleichsgewichte 12 spielfrei in der Kammer
gehalten sind.

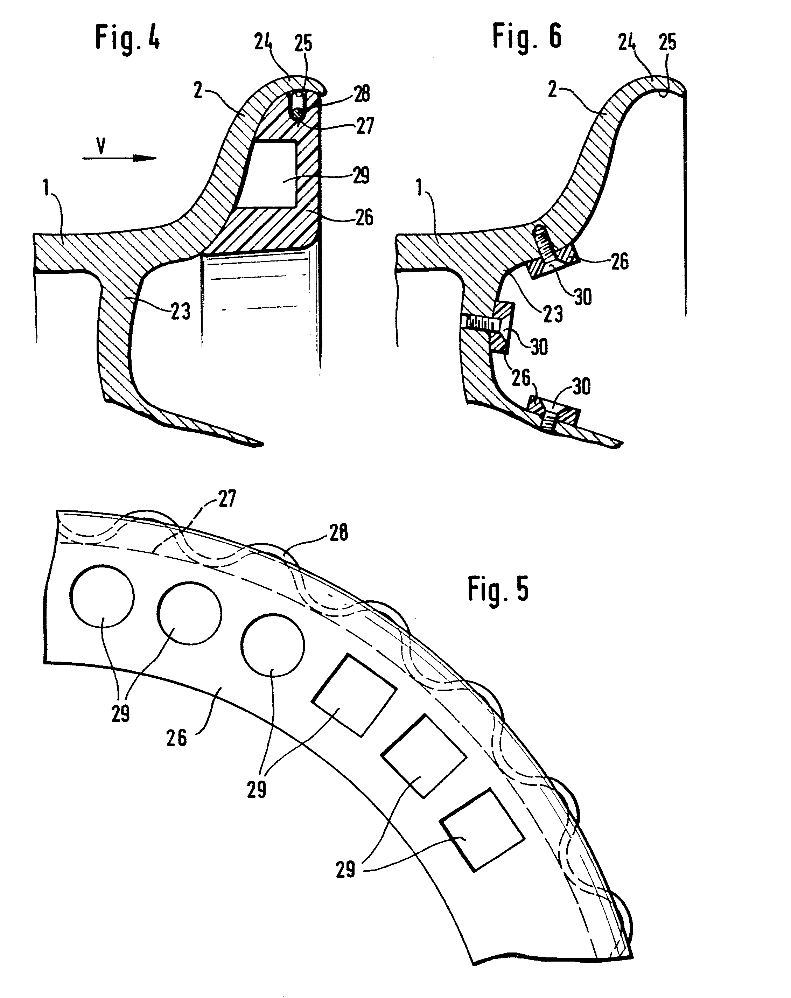

Bei der in Fig. 3 dargestellten Ausführung bezeichnen
gleiche Bezugszeichen gleiche Teile. Das Felgenhorn
weist eine äußere Schürze 13 auf, die sich konisch
nach außen erweitert, so daß eine entsprechende
Ausnehmung 14 entsteht. Der Paßring 8 besitzt
anstelle des äußeren U-Schenkels eine den Schürzenrand überfassende Klemmleiste 15.

Nach dem Messen der Unwucht des Kraftfahrzeugrades
werden auf benachbarte Stifte 11 des Paßrings

0143200

- 7 -

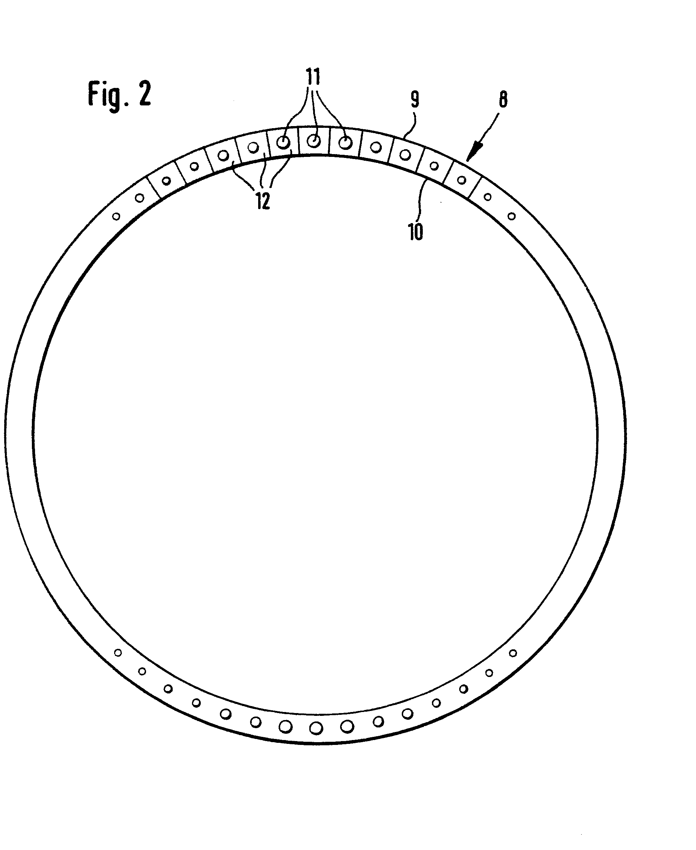

8 eine entsprechende Anzahl von Ausgleichsgewichten
gesetzt und wird dann der Paßring 8 oder die
Schürze 6 (Fig.1) oder über die Schürze 13 (Fig.2)
geklemmt. Bei einem später erforderlich werdenden
Auswuchten wird zunächst der Paßring entfernt
und dann wieder mit neuverteilten Ausgleichsgewichten
auf das Felgenhorn aufgeklemmt.

In Fig. 4 ist schematisch eine Felge 1 eines
Kraftfahrzeugrades dargestellt. Die Felge 1 weist
ein inneres Felgenhorn 2 und ein nicht dargestelltes
äußeres Felgenhorn auf. An das Felgenhorn 2 schließt
sich radial innen ein Felgenhump 23 an. Das Felgenhorn 2 geht radial außen in eine in axialer Richtung
gerichtete runde Schürze 24 über, die eine kreisförmige hinterschnittene Ausnehmung 25 bildet.
In diese Ausnehmung 25 ist ein Ring 26 eingesetzt,
dessen Querschnitt aus Fig. 4 ersichtlich ist.

Der Ring 26 besitzt innenseitig eine der Außenseite
des Felgenhorns angepaßte Kontur. Der Ring 26
besteht aus einem Kunststoffmaterial und besitzt
radial außen eine umlaufende Nut 27 für eine
darin untergebrachte Ausgleichsfeder 28, die
sich über den Umfang des Rings 26 erstreckt.
Bei der dargestellten Ausführung ist die Ausgleichsfeder 28 eine gewellte Schlangenfeder (Fig. 5),
die sich innenseitig an der Ausnehmung 25 abstützt
und den Ring 26 hält.

Felgenseitig besitzt der Ring 26 auf einem Teilkreis
in regelmäßigen Abständen angeordnete Ausnehmungen 29, die zum Felgenhorn 2 hin offen sind.
Die Querschnitte der Ausnehmungen 29 können kreis-

0143200

- 8 -

förmig oder rechteckig bis quadratisch sein,
wie das in Fig. 5 angedeutet ist. In die Ausnehmungen
29 können angepaßte Ausgleichsgewichte nach dem
Auswuchten des betreffenden Kraftfahrzeugrades
eingesetzt werden.

Bei der in Fig. 6 dargestellten Ausführung bezeichnen gleiche Bezugzeichen gleiche Teile. Der
Ring 26 mit den Ausnehmungen 29 für die Ausgleichsgewichte ist nicht mehr unter dem Felgenhorn,
sondern im Bereich des Felgenhumpes 23 befestigt.
In Fig. 6 ist angedeutet, daß der Ring 26 auch
in radiale Richtung mehr zur Nabe des Kraftfahrzeugrades hin angeordnet werden kann. Damit der Ring
an einer geeigneten Stelle, d.h. auf dem gewünschten
Teilkreis der Felge 1 befestigt werden kann,
besitzt er Durchgangsbohrungen für Befestigungsschrauben 30, die in zugeordnete Gewindebohrungen
der Felge eingedreht werden.

Nicht dargestellt ist, daß der Ring 26 auch als
Träger für eine Radkappe ausgebildet sein kann
und dementsprechend eine Einrichtung zum Befestigen
der Radkappe besitzen kann.

—1—

Ansprüche:

1. Vorrichtung zum Befestigen von Ausgleichsgewichten an Felgen (1) von Kraftfahrzeugrädern, gekennzeichnet durch einen an der Felge befestigbaren Ring (8,26), der auf seiner der Felge (1) zugewandten Seite auf einem Teilkreis und in regelmäßigen Abständen angeordnete Aufnahmen (11,29) für Ausgleichsgewichte aufweist.

2. Vorrichtung nach Anspruch 1, dadurch gekennzeichnet, daß die Aufnahmen als zur Felge (1) hin offene Ausnehmungen (29) mit profiliertem Querschnitt ausgebildet sind, in die angepaßte Ausgleichsgewichte einsetzbar sind.

3. Vorrichtung nach Anspruch 1, dadurch gekennzeichnet, daß die Ausnehmungen (29) einen Kreisquerschnitt aufweisen.

4. Vorrichtung nach Anspruch 1, dadurch gekennzeichnet, daß die Ausnehmungen (29) einen rechteckigen bis quadratischen oder ovalen Querschnitt aufweisen.

5. Vorrichtung nach einem der Ansprüche 1 bis 4, dadurch gekennzeichnet, daß der Ring (26) Durchgangslöcher für Befestigungsschrauben (30) Klemmen oder Druckknöpfe aufweist, mit denen der Ring (26) auf einem Teilkreis der
Felge (1) befestigbar ist.

6. Vorrichtung nach einem der Ansprüche 1 bis 5,
gekennzeichnet durch einen unter ein rundes
Felgenhorn (3,6) oder über ein flaches Felgenhorn
(3,13) klemmbaren Paßring (8), der auf seiner
dem Felgenhorn (3) zugewandten Seite eine
Reihe von Stiften (11) aufweist, auf die mit
einem zugeordneten Loch versehene Ausgleichsgewichte (12) aufsetzbar sind.

7. Vorrichtung nach Anspruch 6, dadurch gekennzeichnet, daß die Stifte (11) in regelmäßigen Abständen
angeordnet sind.

8. Vorrichtung nach Anspruch 6 oder 7, dadurch
gekennzeichnet, daß die Ausgleichsgewichte
(12) im wesentlichen quaderförmig ausgebildet
sind und jeweils gleiche Masse besitzen.

9. Vorrichtung nach einem der Ansprüche 6 bis
8, dadurch gekennzeichnet, daß mehrere auf
benachbarte Stifte (11) aufgesetzte Ausgleichsgewichte (12) sich aneinander abstützen, daß
der Paßring (11) ein im Querschnitt U-förmiges
Profil aufweist und eine ringförmige Kammer
zur Aufnahme der Ausgleichsgewichte (12) bildet.

10. Vorrichtung nach einem der Ansprüche 1 bis
9, dadurch gekennzeichnet, daß außen auf den
Paßring (11) eine das Felgenhorn (3) überfassende
Klemmleiste (15) angeformt ist.

0143200

- 3 -

11. Vorrichtung nach einem der Ansprüche 1 bis 10
    in der Ausführung mit einem unter ein rundes
    Felgenhorn klemmbaren Ring, dadurch gekennzeichnet, daß der Ring (26) an seiner radial äußeren
    Umfangsfläche eine umlaufende Nut (27) zur
    Aufnahme einer Ausgleichsfeder (8) aufweist.

12. Vorrichtung nach Anspruch 11, dadurch gekennzeichnet, daß die Ausgleichsfeder (28) eine gewellte
    Schlangenfeder oder angegossene Federelemente
    aufweist.

13. Vorrichtung nach einem der Ansprüche 1 bis 12,
    dadurch gekennzeichnet, daß der Ring (26)
    eine Einrichtung zum Befestigen einer Radkappe
    aufweist.

14. Vorrichtung nach einem der Ansprüche 1 bis
    13, dadurch gekennzeichnet, daß der Paßring
    (8) aus Kunststoffmaterial besteht.

15. Vorrichtung nach einem der Ansprüche 1 bis
    14, dadurch gekennzeichnet, daß der Paßring
    (8) aus Hart-PVC besteht.

0143200

Fig. 3

Fig. 1

Fig. 2

0143200

Fig. 4

Fig. 6

Fig. 5